(19) Europäisches Patentamt
European Patent Office
Office européen des brevets

(11) **EP 3 420 304 B1**

(12) **EUROPÄISCHE PATENTSCHRIFT**

(45) Veröffentlichungstag und Bekanntmachung des Hinweises auf die Patenterteilung:
**26.07.2023 Patentblatt 2023/30**

(21) Anmeldenummer: **17706778.2**

(22) Anmeldetag: **23.02.2017**

(51) Internationale Patentklassifikation (IPC):
**G01B 9/02004** *(2022.01)* **G01B 9/02056** *(2022.01)*
**G01B 9/02055** *(2022.01)* **G01B 9/02** *(2022.01)*
**G01B 11/14** *(2006.01)* **G01N 21/41** *(2006.01)*
**G01N 21/45** *(2006.01)* **G01S 17/34** *(2020.01)*

(52) Gemeinsame Patentklassifikation (CPC):
**G01B 9/02004; G01B 9/02057; G01B 9/0207;**
**G01B 9/02083; G01B 11/02; G01B 11/14;**
**G01N 21/4133; G01N 21/45; G01S 17/34;**
G01B 2290/60

(86) Internationale Anmeldenummer:
**PCT/EP2017/054128**

(87) Internationale Veröffentlichungsnummer:
**WO 2017/144567 (31.08.2017 Gazette 2017/35)**

(54) **VERMESSUNG EINER KAVITÄT MITTELS INTERFERENZSPEKTROSKOPIE**

MEASURING A CAVITY BY MEANS OF INTERFERENCE SPECTROSCOPY

MESURE D'UNE CAVITÉ PAR SPECTROSCOPIE À INTERFÉRENCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.02.2016 DE 102016103109**

(43) Veröffentlichungstag der Anmeldung:
**02.01.2019 Patentblatt 2019/01**

(73) Patentinhaber: **Habrich, Björn**
**64285 Darmstadt (DE)**

(72) Erfinder: **Habrich, Björn**
**64285 Darmstadt (DE)**

(74) Vertreter: **Betten & Resch**
**Patent- und Rechtsanwälte PartGmbB**
**Maximiliansplatz 14**
**80333 München (DE)**

(56) Entgegenhaltungen:
EP-A1- 2 175 228    JP-A- 2012 184 967
US-A- 5 956 355

- COE P A ET AL: "Frequency scanning interferometry in ATLAS: remote, multiple, simultaneous and precise distance measurements in a hostile environment", MEASUREMENT SCIENCE AND TECHNOLOGY, IOP, BRISTOL, GB, Bd. 15, Nr. 11, 30. September 2004 (2004-09-30), Seiten 2175-2187, XP020066401, ISSN: 0957-0233, DOI: 10.1088/0957-0233/15/11/001
- CHUL-MOO KANG ET AL: "Inspection system for microelectronics BGA package using wavelength scanning interferometry", SPIE - INTERNATIONAL SOCIETY FOR OPTICAL ENGINEERING. PROCEEDINGS, Bd. 4564, 4. Oktober 2001 (2001-10-04), Seite 74, XP055362385, US ISSN: 0277-786X, DOI: 10.1117/12.444114 ISBN: 978-1-5106-0753-8
- P. DOUGLAS KNIGHT ET AL: "High-resolution measurement of the free spectral range of an etalon", SPIE - INTERNATIONAL SOCIETY FOR OPTICAL ENGINEERING. PROCEEDINGS, Bd. 4772, 1. Oktober 2002 (2002-10-01), Seite 114, XP055361957, US ISSN: 0277-786X, DOI: 10.1117/12.451810 ISBN: 978-1-5106-0753-8

## Beschreibung

### Gebiet der Erfindung

Die Erfindung betrifft ein Verfahren und eine Vorrichtung zur interferometrischen Vermessung der verschiedenen optischen und mechanischen Parameter einer Kavität, insbesondere seiner Länge.

### Hintergrund der Erfindung

Jedes Interferometer beruht auf dem Prinzip, einen vom Ziel reflektierten kohärenten Lichtstrahl mit einem internen Referenzstrahl zu überlagern und das entstehende Interferenzsignal auszuwerten.

Je nachdem, welche Parameter der Kavität sich ändern, verändert sich das Interferenzsignal auf verschiedene Weise. Bei Längenänderungen des Interferometers (der Kavität) oder auf Grund von Wellenlängenänderungen der kohärenten Lichtquelle wird die Phase des periodischen (sinus- bzw. cosinusförmigen) Interferenzsignals durchlaufen. Die Geschwindigkeit dieser Phasenänderung ist proportional zur Geschwindigkeit einer Längenänderung der Kavität bzw. der Geschwindigkeit einer Wellenlängenänderung der Lichtquelle multipliziert mit der aktuellen Länge der Kavität. Bei der Änderung von anderen optischen Parametern der Kavität ändern sich z.B. der Kontrast oder die Amplitude des Interferenzsignals.

Aus der Patentanmeldung EP 2 363 685 A1 ist eine Vorrichtung und ein Verfahren zur interferometrischen Positionserfassung bekannt, die ein Fabry-Perot Interferometer aufweist. Durch Messung der Intensität des von den Spiegeln des Fabry-Perot-Interferometers reflektierten Lichts lässt sich der Spiegelabstand bzw. eine Änderung des Spiegelabstands ermitteln. Da die Wellenlänge $\lambda$ des Messlichtes bekannt ist, lässt sich aus einer Messung der Intensität des reflektierten Lichts die Änderung der Länge des Resonators des Fabry-Perot Interferometers bestimmen.

Verfahren zur Entfernungsmessung wie das in der EP 2 363 685 A1 Beschriebene versuchen, die Wellenlänge bekannt und konstant zu halten, damit ein eindeutiger Rückschluss von Veränderungen des sinusförmigen Interferenzmusters auf Längenänderungen der Kavität und damit Änderungen des Abstands eines Objekts möglich ist (siehe auch Fig. 1 und Fig. 2 in EP 2 363 685 A1).

Problematisch ist dabei, dass es großen Aufwand erfordert, die Wellenlänge zu kalibrieren und konstant zu halten. Außerdem entsteht ein Problem in der Nähe der Extremstellen des Sinus, denn dort ist die Abhängigkeit des Signals von der Bewegung des Objekts schwächer. An den Extremstellen selbst ist sie nur noch von zweiter Ordnung und macht das Signal damit mehrdeutig. Weiterhin kann man auf diese Art nicht zwischen Änderungen der Länge der Kavität und Änderungen von anderen optischen Parametern wie z.B. der Reflektivität bzw. des Brechungsindexes unterscheiden.

Im Stand der Technik sind zwei Möglichkeiten vorgeschlagen und realisiert worden, einen Teil dieser Probleme zu lösen:

• Werden gleichzeitig mehrere Lichtquellen (vorzugsweise Laser) mit unterschiedlichen Wellenlängen benutzt, tritt das Problem der Extremstellen nur sehr selten gleichzeitig bei allen Lichtquellen auf. So können sie abwechselnd zur Messung benutzt werden. Mehrere Laser bedeuten aber zugleich stark erhöhten Aufwand und damit erhöhte Kosten.

• Durch hochfrequente Modulation der Wellenlänge des durchstimmbaren Lasers mit kleiner Amplitude, die im Effekt einer kleinen Bewegung des Ziels entspricht, wird zusätzlich zum Interferenz-Signal dessen genäherte erste Ableitung nach der Position gemessen. Diese ist komplementär zum direkten Signal in dem Sinne, dass ihre stärkste Abhängigkeit von der Position gerade dort besteht, wo das direkte Signal unsensibel ist - und umgekehrt. Zusammen ergeben sie ein stets auswertbares Signal. Da die "Ableitung" auf einer Differenzbildung beruht, verstärkt sie allerdings das Rauschen des InterferenzSignals erheblich.

Nachteilig an diesen Möglichkeiten ist also, dass sie entweder den Aufwand erhöhen und/oder weitere Informationen verwenden, die mit einer zusätzlichen Messungenauigkeit behaftet sind. Weiterhin ist es diesen Verfahren nicht oder nur sehr schwer möglich, aus einer Änderung des Interferenzsignals direkt auf die Änderung der Länge der Kavität zurückzuschließen. Es können sich immer auch optische Bedingungen geändert haben, die dann zu einem Fehler in der Längenmessung führen. Ein weiteres Problem ist, dass sich bei einem stillstehenden Objekt und einer fest eingestellten Wellenlänge auch das Interferenzsignal kaum ändert und deshalb eine sehr hohe Empfindlichkeit gegenüber Störungen vorliegt.

Aufgabe der vorliegenden Erfindung ist es daher, ein Verfahren und eine Vorrichtung zur interferometrischen Entfernungsmessung zu schaffen, die die aus dem Stand der Technik bekannten Probleme lösen, mit vergleichsweise geringem Aufwand umzusetzen sind und insbesondere eine möglichst große Meßgenauigkeit ermöglichen.

Die Veröffentlichung "Frequency scanning interferometry in ATLAS: remote, multiple, simultaneous and precise distance measurements in a hostile environment" von Coe et al. beschreibt ein Frequenzabtastinterferometer zur Absolutdistanzinterferometrie, um Formänderungen eines Halbleiter Partikel-Trackers am CERN zu überwachen. Dabei wird gleichzeitig am Ziel und an einer Referenz-Kavität gemessen und die Interferenz-Spektren werden per Fit ausgewertet und verglichen. Zwei Laser werden thermisch durchgestimmt, um das Doppler-verstärkte Bewegungs-Unschärfe zu kompensieren.

Die Veröffentlichung "Inspection system for microelectronics BGA package using wavelength scanning interferometry" von Kang et al. beschreibt ein interferometrisches Verfahren zur Bestimmung der Absolutentfernung zu einem bewegungslosen Zielobjekt. Um die Genauigkeit zu verbessern, wird ein Frequenz-Sweep vermessen und an einen Sinus mit einigen Oberwellen gefittet.

Die EP 2175228 A1 offenbart ein Verfahren zur Messung der Länge eines reflektierenden Resonators wobei ein von ihm emittiertes elektromagnetisches Spektrum analysiert wird. Das emittierte Spektrum wird zur Schätzung einer ersten Hohlraumlänge verwendet. Diese Schätzung wird danach verbessert, indem zunächst mindestens eine Interferenz n um für das Spektrum berechnet, dieser Wert je nach Konfiguration des Resonators auf z.B. eine ganze Zahl oder eine Halbzahl eingestellt und anschließend die Länge des Resonators mit dem eingestellten Wert der Interferenzzahl neu berechnet wird.

Die Veröffentlichung "High-resolution measurement of the free spectral range of an etalon" von Knight et al. beschreibt die hochauflösende Messung des freien Spektralbereichs (FSR) für ein Etalon. Dabei wird die Steigung an einem bestimmten Punkt der Etalon-Responsekurve als Mittel zur Messung von FSR verwendet.

Die JP2012184967 A offenbart ein Wellenlängen-Scan-Interferometer zur präzisen Messung des Absolutabstandes zu einem sich bewegenden Prüfobjekt. Ein frequenz-linearer Wellenlängen-Sweep wird ausgeführt, wobei die Wellenlänge über die Absorption mit einem Etalon gemessen wird.

Ein weiteres Verfahren zur interferometrischen Bestimmung der Länge einer Kavität ist aus US 5956355 A bekannt.

## Zusammenfassung der Erfindung

Erfindungsgemäß wird diese Aufgabe gelöst durch ein Verfahren gemäß Anspruch 1 zur interferometrischen Bestimmung der geometrischen und/oder optischen Parameter einer Kavität.

Die Erfindung schlägt weiterhin eine Vorrichtung zur interferometrischen Bestimmung der geometrischen und/oder optischen Parameter einer Kavität gemäß Anspruch 14 vor.

Erfindungsgemäß wird also mit einer möglichst hohen Geschwindigkeit, Genauigkeit und Breite ein Interferenzspektrum I(f) aufgenommen, also ein nichtlokales Abbild des frequenzabhängigen Interferenzsignals der Lichtquelle ausgewertet und durch dessen mathematische Analyse auf die mechanischen bzw. geometrischen und die optischen Parameter der Kavität rückgeschlossen.

Dabei ist keine Bewegung des Objekts notwendig, um die Messwerte auszuwerten. Für die reine Entfernungsmessung (Länge bzw. Längenänderung der Kavität) wird das aufgenommene Interferenzspektrum in Bezug auf seine Periodizität ausgewertet. Es enthält aber wesentlich mehr Information, die für die Beobachtung optischer Parameter des Interferometers benutzt werden können. Z.B. kann aus der Amplitude auf eine evtl. veränderliche Reflektivität geschlossen werden, um die Leistung des Lasers und/oder die Reflektivität des Referenzstrahls nachzuregeln. Ein anderes Beispiel ist die Messung der Dispersion (sofern groß genug) des Mediums in der Kavität mit Hilfe eines Vergleichs der gemessenen Entfernungen aus verschiedenen Teilen des Sweeps oder im Vergleich mit dem Interferenzspektrum aus einer Referenzkavität in der die jeweils anderen Parameter (z.B. deren Länge) konstant sind.

Die Auswertung des Interferenzsignals I(f) kann durch numerischen Fit an eine Sinusfunktion erfolgen, wobei Amplitude und Phase des Interferenzsignals I(f) bestimmt werden. Je mehr Messwerte vorliegen, umso genauer kann der numerische Fit an den theoretischen Kurvenverlauf des Interferenzsignals angepasst und umso präziser die gesuchten Parameter extrahiert werden. Es können auf diese Art auch Verzerrungen des Signals in Abhängigkeit der Frequenz untersucht, womit man auch optische Parameter extrahieren kann, die eine Funktion der Wellenlänge der kohärenten Lichtquelle sind.

Für die verschiedenen Messungen kann der ausgewertete Frequenzbereich Δf angepasst werden. Für ein Auswertung von Amplitude und Phase zur Bestimmung der Länge der Kavität wird dabei vorzugsweise einer Phase von wenigstens 180°, insbesondere etwa 360° des Interferenzsignals I(f) benutzt, damit mögliche Verzerrungen nicht die Güte des numerischen Fits verschlechtern. Geht es bei den Messungen eher um wellenlängenabhängige Messgrößen, sollte der ausgewertete Frequenzbereich eher so groß wie möglich gewählt werde, damit diese Verzerrungen als Funktion der Wellenlänge besser ausgewertet werden können.

Für den numerischen Fit bieten sich viele mathematische Verfahren an, zum Beispiel Standardverfahren wie die Methode der kleinsten Quadrate, der Levenberg-Marquardt-Algorithmus oder ein Lock-In-Verfahren mit synthetischer Referenz.

Das vorgestellte Verfahren ist für diverse Anwendungen zur Entfernungsmessung geeignet. Insbesondere sind die Anwendungsfälle relevant, in denen die zu bestimmende Länge x durch die Länge eines Ziel-Interferometers gebildet wird, das durch einen optischen Koppler und ein bewegliches Objekt begrenzt ist.

Das erfindungsgemäße Verfahren kann um den Schritt ergänzt werden, die Frequenz f der Lichtquelle 10 unter Verwendung der bekannten Frequenz $f_R$ einer bestimmten Absorptionslinie eines Absorptionsmaterials mit hoher Genauigkeit zu kalibrieren.

Diese Frequenzkalibrierung kann insbesondere durch numerischen Fit an die Frequenz $f_R$ der Absorptionslinie des Absorptionsmaterials erfolgen. Alternativ oder zusätzlich kann es vorteilhaft sein, die Frequenz f der kohärenten Lichtquelle unter Verwendung eines Referenz-Interferometers 60 bekannter Länge zu kalibrieren.

Die Frequenz f der kohärenten Lichtquelle wird zyklisch durchgestimmt. In jedem Zyklus wird die Frequenz des Lasers gleichmäßig von einem Start- zu einem Zielwert durchgestimmt (*Frequenz-Sweep).* Diese Frequenzdurchstimmung kann vorzugsweise linear erfolgen, beispielsweise dadurch, dass der Zusammenhang zwischen der Frequenz und der unmittelbar beeinflussbaren elektronischen Stellgröße in einer Lookup-Tabelle hinterlegt wird. Diese Lookup-Tabelle kann auch dynamisch während der Messung nachkalibriert werden. Eine gleichmäßige Verteilung der Messpunkte über den betrachteten Bereich erhöht die Genauigkeit der Auswertung, insbesondere die Güte des Fits und der resultierenden Fit-Parameter.

Das erfindungsgemäße Verfahren kann zusätzlich um den Verfahrensschritt einer Grobmessung der Länge x durch Auszählen der durchlaufenen Perioden des Interferenzsignals I(f) ergänzt werden. Für die Grobmessung genügt ein heuristisches Verfahren, welches nur eindeutig die durchlaufenen Perioden in beiden Richtungen während des Frequenzsweeps mitzählen muss.

Die Durchstimmung der Frequenz f der kohärenten Lichtquelle kann thermisch mittels Temperatursteuerung, elektrisch durch Regelung eines Ansteuerstroms oder mechanisch durch Veränderung der Länge der Kavität der Lichtquelle erfolgen.

Das erfindungsgemäße Verfahren erlaubt zusätzlich, den durchfahrenen Frequenzbereich Δf der kohärenten Lichtquelle in Abhängigkeit der Geschwindigkeit und des Abstandes des beweglichen Objekts zu wählen.

Als durchstimmbare kohärente Lichtquelle 10 kann eine Laserdiode, insbesondere eine DFB-Laserdiode, verwendet werden.

Bei der erfindungsgemäßen Vorrichtung kann das Ziel-Interferometer beispielsweise als Fabry-Perot-Interferometer ausgebildet sein.

Außerdem kann die Vorrichtung einen Detektor (32) zur Bestimmung der Amplitude der Intensität des Referenzstrahls im Laufe eines Messzyklus umfassen. Da die Intensität des von der durchstimmbaren Lichtquelle ausgesandten Lichts im Laufe eines Messzyklus schwanken kann, wird die Auswertung erschwert. Insofern ist es vorteilhaft, das Interferenzsignal durch die gleichzeitig gemessene Intensität des Referenzstrahls zu dividieren und damit zu normieren.

## Figurenbeschreibung

Die Erfindung wird nachstehend anhand von Ausführungsbeispielen unter Bezugnahme auf die Zeichnungen im Einzelnen beschrieben. Dabei zeigt:

Fig. 1    eine schematische Darstellung eines ersten Ausführungsbeispiels der erfindungsgemäßen Vorrichtung zur interferometrischen Bestimmung der geometrischen und optischen Eigenschaften einer Kavität,

Fig. 2    eine schematische Darstellung eines zweiten Ausführungsbeispiels der erfindungsgemäßen Vorrichtung zur interferometrischen Bestimmung der geometrischen und optischen Eigenschaften einer Kavität,

Fig. 3    eine schematische Darstellung eines dritten Ausführungsbeispiels der erfindungsgemäßen Vorrichtung zur interferometrischen Bestimmung der geometrischen und optischen Eigenschaften einer Kavität,

Fig. 4    eine schematische Darstellung eines vierten Ausführungsbeispiels der erfindungsgemäßen Vorrichtung zur interferometrischen Bestimmung der geometrischen und optischen Eigenschaften einer Kavität,

Fig. 5    eine schematische Darstellung eines fünften Ausführungsbeispiels der erfindungsgemäßen Vorrichtung zur interferometrischen Bestimmung der mechanischen und optischen Eigenschaften einer Kavität,

Fig. 6    eine schematische Darstellung des Interferenzspektrums eines am Detektor erfassten Interferenzsignals gemäß einem Ausführungsbeispiel des erfindungsgemäßen Verfahrens, und

Fig. 7    eine schematische Darstellung des Absorptionsspektrums eines von der Lichtquelle ausgestrahlten Lichtstrahls an einer mit einem Absorptionsmedium gefüllten Gaszelle gemäß einem Ausführungsbeispiel des erfindungsgemäßen Verfahrens.

**Detaillierte Beschreibung von Ausführungsbeispielen**

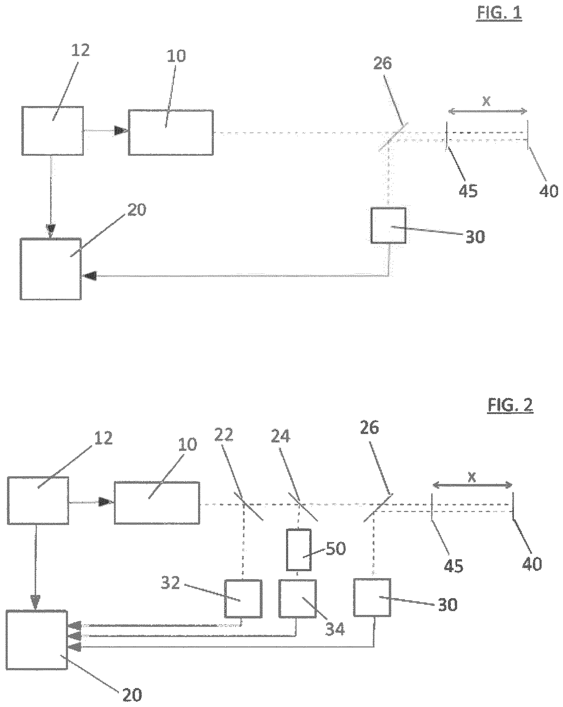

Figur 1 zeigt eine schematische Darstellung eines ersten Ausführungsbeispiels einer erfindungsgemäßen Vorrichtung zur interferometrischen Bestimmung der mechanischen/geometrischen und der optischen Eigenschaften einer Kavität. Dabei ist wie in den folgenden Abbildungen das Grundprinzip des Aufbaus der Vorrichtung gezeigt. Einrichtungen zur Kalibrierung, Energieversorgung, Temperatur-Kontrolle etc. sind nicht dargestellt, ebenso wenig optische Hilfseinrichtungen wie Blenden, Kollimatoren etc. Zum besseren Verständnis sind weiterhin in den Zeichnungen die aus- und einfallenden Strahlen nebeneinander dargestellt. Tatsächlich sind diese Strahlen in der Regel jedoch geometrisch nicht getrennt.

Als kohärente Lichtquelle 10 zur Strahlerzeugung dient in den gezeigten Ausführungsbeispielen ein durchstimmbarer Laser, z.B. eine DFB-Laserdiode, die vorzugsweise sichtbares oder infrarotes Licht abstrahlt. Zur Frequenzdurchstimmung ist eine Modulationseinheit 12 vorgesehen. Die Durchstimmung kann dabei z.B. thermisch mittels Temperatursteuerung, elektrisch durch Regelung des Ansteuerstroms oder mechanisch durch Größenveränderung der Kavität 40, 45 in der Laserdiode erfolgen und hat zur Folge, dass sich die Phase der sinusförmigen Interferenzsignale analog zu einer echten Bewegung ändert. Zur Frequenzstabilisierung befindet sich die Lichtquelle 10 vorzugsweise in einer (nicht dargestellten) Zelle mit kontrollierten Umgebungs-Bedingungen, insbesondere mit geregelter Temperatur.

Der von der kohärenten Lichtquelle 10 abgestrahlte Strahl passiert den teildurchlässigen Spiegel 26 und fällt auf einen optischen Koppler 45. Dieser ist ebenfalls teildurchlässig, wodurch der Strahl aufgeteilt wird in einen intern reflektierten Anteil, der direkt auf den Detektor 30 fällt, sowie einen durchgelassenen Anteil, der zweimal die zu messende Länge x durchläuft, d.h. eine Kavität in Form eines Interferometers vom Typ Fabry-Perot zwischen dem optischen Koppler 45 und einem reflektierenden, beweglichen Objekt 40. Diese beiden Teilstrahlen werden am optischen Koppler 45 überlagert und durch den Spiegel 26 auf den Detektor 30 gelenkt und erzeugen dort das Interferenz-Signal. Die Art der Interferenz-Erzeugung ist nicht entscheidend für die erfindungsgemäße Funktion; auch Interferometer anderen Typs sind geeignet.

Die Modulationseinheit 12 steuert den Wellenlängen-Zyklus der Lichtquelle 10 und gibt ihr Signal zugleich an eine Auswertungseinheit 20 weiter, die aus diesem und den empfangenen Interferenzsignalen vom Detektor 30 das Ergebnis berechnet. Die Signalauswertung wird weiter unten im Detail erläutert werden.

Figur 2 zeigt eine schematische Darstellung eines zweiten Ausführungsbeispiels einer erfindungsgemäßen Vorrichtung zur interferometrischen Bestimmung der mechanischen/geometrischen und optischen Eigenschaften einer Kavität. Gegenüber dem in Figur 1 gezeigten Ausführungsbeispiel weist dieses zusätzlich einen teildurchlässigen Spiegel 22 auf, an dem ein Teilstrahl zu einem Detektor 32 abgezweigt wird, der eine Referenzintensität bestimmt, um mögliche Intensitätsänderungen der Lichtquelle im Laufe eines Messzyklus zu erfassen und bei der Auswertung zu berücksichtigen. Ein weiterer teildurchlässiger Spiegel 24 lenkt einen Teilstrahl auf eine Gaszelle 50, die mit einem vorzugsweise gasförmigen Absorptionsmaterial mit einer scharfen Absorptionslinie gefüllt ist. Die Absorption wird vom Detektor 34 erfasst und erlaubt eine Kalibrierung der Frequenz der Lichtquelle 10 mit hoher Genauigkeit.

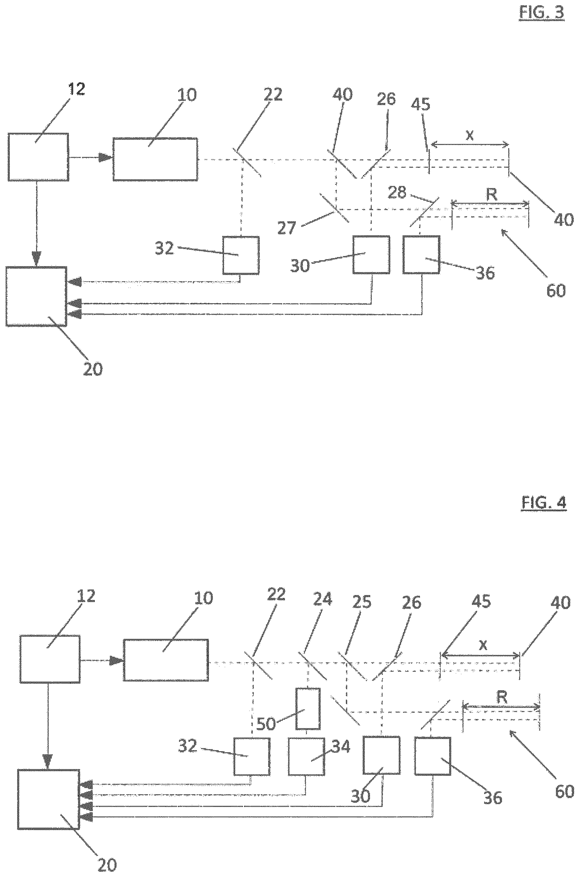

Figur 3 zeigt eine schematische Darstellung eines weiteren Ausführungsbeispiels einer erfindungsgemäßen Vorrichtung zur interferometrischen Bestimmung der mechanischen/geometrischen und optischen Eigenschaften einer Kavität. Die in dem Ausführungsbeispiel von Figur 2 vorgesehene Gaszelle 50 ist hierbei durch ein Referenz-Interferometer 60 mit genau bekannter Länge R und zugehörigem Detektor 36 und teildurchlässigen Spiegel 28 ersetzt. Das am Detektor 36 erfasste Signal kann verwendet werden, um die Linearität des FrequenzSweeps über der Lichtfrequenz zu gewährleisten bzw. zu rekonstruieren.

Figur 4 zeigt eine schematische Darstellung eines vierten Ausführungsbeispiels einer erfindungsgemäßen Vorrichtung zur interferometrischen Bestimmung der mechanischen/geometrischen und optischen Eigenschaften einer Kavität, wobei sowohl eine Gaszelle 50 - wie in Verbindung mit Figur 2 erläutert - als auch ein Referenz-Interferometer 60 gemäß Figur 3 vorgesehen sind.

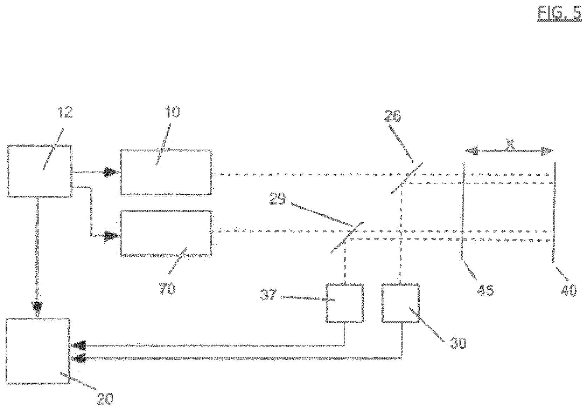

Figur 5 zeigt eine schematische Darstellung eines fünften Ausführungsbeispiels einer erfindungsgemäßen Vorrichtung zur interferometrischen Bestimmung der mechanischen/geometrischen und optischen Eigenschaften einer Kavität, wobei ein zweiter Laser 70 mit zugehörigem teildurchlässigen Spiegel 29 zur Auskopplung des von dem zweiten Laser 70 abgestrahlten Lichtstrahls sowie ein weiter Detektor 37 zur Erfassung eines Interferenzsignals vorgesehen sind. Durch den zweiten Laser 70 kann ein breites Interferenzspektrum abgedeckt werden, falls sich ein einzelner Laser nicht weit genug oder schnell genug durchstimmen lässt. Für die Abdeckung eines möglichst großen Bereiches an Frequenzen, also einem möglichst breiten Interferenzspektrum können auch mehrere Laser herangezogen werden. Gerade bei Messungen der oft sehr geringen Dispersion (Abhängigkeit des Brechungsindex von f), kann man mit der Verwendung mehrerer Laser einen großen Bereich an Wellenlängen abdecken und dabei auch Lücken im Spektrum in Kauf nehmen. Man würde dafür die verschiedenen Laser abwechselnd ansteuern und muss deshalb bei der Auswertung keine Trennung der Signale vornehmen. Man kann allerdings auch mit mehreren Lasern parallel mehrere Interferenzspektren an verschiedenen interessanten Arbeitspunkten aufnehmen und miteinander korrelieren, dafür würden die Laser mit verschiedenen Frequenzen modulieren werden oder in ihrer Wellenlänge verschieden genug sein, damit man sie bei der Auswertung wieder trennen kann.

Im Folgenden wird die an der Auswertungseinheit 20 durchgeführte Messwertaufnahme und anschließende Messwertverarbeitung im Detail erläutert.

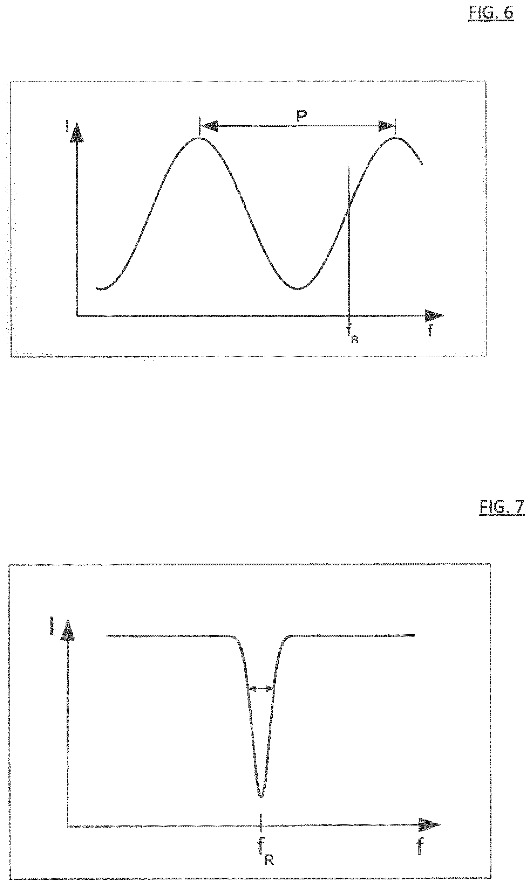

In jedem Zyklus wird die Wellenlänge des Lasers gleichmäßig von einem Start- zu einem Zielwert verändert (Wellenlängen-Sweep) und die jeweilige Interferenzsignalintensität I in Abhängigkeit von der Frequenz f erfasst, wie schematisch in Figur 6 gezeigt ist. Aus praktischen Gründen geschieht das erfindungsgemäß in alternierender Richtung.

Es ist nicht entscheidend, Anfangs- und Endwert genau zu kennen. Falls eine Gaszelle 50 (siehe Figuren 2 und 4) als Referenz genutzt wird, muss ab und zu eine ihrer Absorptionslinien zu Kalibrierungszwecken überstrichen werden. In der Regel wird es nicht möglich sein, die Laserwellenlänge isoliert zu verstellen. Beim DFB-Laser z.B. ist damit immer auch eine Änderung der Intensität verbunden. Diese kann in der Auswertung durch Erfassung einer Referenzintensität am Detektor 32 (Siehe Figuren 2 - 4) berücksichtigt werden. Während des Sweeps werden die entstehenden Signale mit einer Vielzahl von Einzelmessungen aufgenommen. Durch eine Elektronik werden sie mit dem Sweep korreliert und zur Auswertung an der Auswertungseinheit 20 bereitgestellt.

Für die Auswertung müssen die Messwerte mit der Lichtfrequenz des Lasers f =c /λ korreliert werden. Der Zusammenhang zwischen f und λ ist also nichtlinear, und λ hängt über Kennlinien des Lasers und der Elektronik von der unmittelbar beeinflussbaren elektronischen Stellgröße S (i.d.R. der Eingangswert eines DA-Wandlers) ab. Daher kann ein Sweep ohne Korrekturen eine ungleichmäßige Änderung von f hervorbringen. Es gibt mehrere Möglichkeiten, dieses Problem zu lösen:

- Der Sweep selbst wird linearisiert. Dazu wird eine Lookup-Tabelle hinterlegt, die die Schrittfolge bei der Änderung der Stellgröße S beeinflusst
- Die Messwert-Aufnahme wird so an S gekoppelt, dass Messwerte in gleichmäßigen f-Schritten aufgenommen werden
- Der ungleichmäßige Abstand der Messwerte über f wird bei der Auswertung ausgeglichen

Alle Verfahren erfordern, dass die Abhängigkeit f(S) ermittelt und daraus eine jeweils passende Lookup-Tabelle berechnet wird. Dazu wird eine Referenz-Kavität 60 bekannter und fester Länge R (Siehe Figuren 3 und 4) eingesetzt, über der der Sweep durchgeführt wird. Es hängt von der Stabilität des verwendeten Lasers 10 ab, ob diese Kalibrierung vorzugsweise einmalig bei der Produktion des Geräts, zyklisch in größeren Abständen oder bei jeder Messung vorgenommen wird.

Wie in den Figuren 1 - 4 dargestellt, interferieren direkt vor dem optischen Koppler 45 die direkt reflektierte Welle und die aus der Kavität (40, 45) zurückkommende Welle. Das Signal am Detektor 30 hat daher die Form:

$$I = A + B \, cos\Phi$$

Die Koeffizienten A, B sind nur sehr schwach von der Wellenlänge abhängig, aber proportional zur Intensität des Lasers. Da die Intensität über einen Messzyklus nicht unbedingt konstant ist, erschwert dies die Auswertung, obwohl A und B selbst nicht interessieren. Das Problem wird dadurch gelöst, dass das Interferenz-Signal durch die gleichzeitig am Detektor 32 (siehe Figuren 2 - 4) gemessene Intensität dividiert wird. A und B können damit im Zyklus als konstant betrachtet werden. Der absolute Phasenunterschied der beiden Lichtstrahlen Φ in Abhängigkeit von der Wellenlänge beträgt dann:

$$\Phi = 2\pi \frac{x}{\lambda} = 2\pi \frac{f \, x}{c}$$

wobei

Φ: Absoluter Phasenunterschied der beiden Lichtstrahlen
x: Lichtweglänge in der Kavität (mit allen Reflexionen)
λ: Lichtwellenlänge
f: Lichtfrequenz, und
c: Lichtgeschwindigkeit

sind. Bei konstantem x ist diese Funktion periodisch über f mit der Periode c/x. Allerdings werden die Einzelmessungen eines Sweeps nicht gleichzeitig vorgenommen, zwischen ihnen kann sich x verändern. Es wird vorausgesetzt, dass der Sweep zeitlich linear in f verläuft f (t)=$f_0$ + w t ist oder nachträglich linearisiert wird. Konstante Geschwindigkeit des Objekts x = $x_0$ + $v$ t wird hier als der Normalfall betrachtet, auf die Rolle der Beschleunigung wird später eingegangen. Dann kann man Φ über f auftragen:

$$\Phi(f)=\Phi_0+\frac{2\pi}{c}f\left(x_0+f_0\frac{v}{w}\right) \quad (\Phi_0 = \text{Konstante bzgl. f})$$

Das Interferenz-Spektrum ist in Figur 5 dargestellt und somit periodisch über f mit der Periode

$$P=\frac{c}{x_0+f_0 v/w} \quad .$$

Der Phasenwert der gezeigten Kurve soll an der Stelle der Referenz-Frequenz $f_R$ besonders genau bestimmt werden. Dazu wird zunächst diese Stelle selbst möglichst genau identifiziert.

Bei Verwendung einer Gaszelle wird zu diesem Zweck zugleich mit der Interferenz-Amplitude das Signal der Wellenlängen-Referenz am Detektor 34 (Figuren 2 und 4) gemessen. Durch die scharfen Absorptionslinien der Gaszelle bildet das Signal in der Nähe von $f_R$ einen scharfen negativen Peak mit einer typischen Breite von ca. 0.1 pm, wie in Figur 7 schematisch dargestellt ist. Die Form des Peaks kann gut modelliert werden, weil sie hauptsächlich durch Dopplerverbreiterung bedingt ist (Gauß-Profil). Durch einen Fit des gemessenen Peaks an die theoretische Form kann $f_R$ also noch erheblich genauer bestimmt werden, als die Linienbreite angibt. Ist keine Gaszelle vorhanden, wird die Stelle der Referenzfrequenz aus der (beispielsweise im Werk kalibrierten) Stellgröße des Lasers 10 oder aus einer alternativen Referenz bestimmt.

Bei der Messung der Phase am Punkt $f_R$ wirken zwei Komponenten zusammen:

(i) Eine Grobmessung zählt die komplett durchlaufenen Perioden. Es handelt sich um eine Relativmessung, die beim ersten Durchlaufen des Punkts $f_R$ mit dem Wert 0 startet. Von da an werden die Perioden des Signals unter Berücksichtigung der Durchlaufrichtung bilanziert. Beim nächsten Durchgang durch $f_R$ wird der Wert als Summand in die Phasenberechnung übernommen und die Zählung beginnt neu. Für die Grobmessung genügt ein (dem Fachmann an sich bekanntes) heuristisches Verfahren. Eine Obergrenze für die Target-Geschwindigkeit ergibt sich aus der Anforderung, dass zwischen zwei Einzelmessungen keine Perioden unbemerkt durchlaufen werden dürfen.

(ii) Zur exakten Relativmessung der Länge x wird neben dem Grob-Messwert der gesamte überstrichene Bereich des Interferenz-Spektrums herangezogen ("Feinmessung"). Im Sinne eines Fits werden Parameter einer Sinusfunktion (Offset, Amplitude, Frequenz, Startphase) ermittelt, die optimal die gemessenen Daten reproduzieren; die Phase dieses Sinus an der Stelle $f_R$ ist das Ergebnis. Zur konkreten Ausführung sind mehrere mathematische Verfahren geeignet, die nach Zweckmäßigkeit bei der Implementierung ausgewählt werden können:

- Numerische Optimierung, z.B. Levenberg-Marquardt-Algorithmus
- Ermittlung der Frequenz und Phase mittels Lock-In mit synthetischer Referenz (nach Art einer PLL); Offset und Amplitude werden nicht benötigt
- Heuristische Ermittlung aller Parameter aus den Extrema der Messwerte

Entscheidend sind folgende Eigenschaften des Verfahrens:

- Zur Bestimmung der Phase werden alle (oder wenigstens möglichst viele) Messwerte eines Sweeps herangezogen, was zur Rauschunterdrückung beiträgt
- Jeder Zyklus kann für sich ausgewertet werden, unabhängig von Drift-anfälligen Kalibrierungsdaten

Die Auflösung der Phasenmessung steigt natürlich mit der Dichte der Messwerte um $f_R$ herum. Andererseits benötigen die beschriebenen Fit-Verfahren einen Abschnitt der Funktion, der die Periodizität erkennen lässt. Optimal ist aus dieser Sicht, wenn die Einzelmessungen wenigstens eine halbe Periode, vorzugsweise genau eine Periode der Funktion I(f) abbilden.

Aus dem Vergleich zweier aufeinander folgender Phasenmessungen wird die Positionsänderung ermittelt:

$$\Delta x = \lambda_R \frac{\Delta \Phi}{2\pi}$$

wobei $\lambda_R = c/f_R$ die Referenzwellenlänge ist.

Im Folgenden wird der Einfluss einer Geschwindigkeit bzw. Beschleunigung des Objektes 40 und der daraus resultierenden zeitlichen Änderung der gesuchten Länge x diskutiert.

Wie oben abgeleitet ergibt die Messwert-Aufnahme eine Kurve Φ über f, die periodisch mit der Periode P ist:

$$P = \frac{c}{x + f\,v/w} \qquad \text{oder} \qquad P = \frac{c}{x}\frac{1}{1 + \dfrac{f}{\Delta f}\dfrac{\Delta x}{x}}.$$

Dabei sind:

f: Lichtfrequenz; Startwert des Sweep
x: Lichtweglänge in der Kavität beim Start des Sweep
v: Änderungsrate von x
w: Änderungsrate von f
c: Lichtgeschwindigkeit
$\Delta x$: Änderung von x während eines Messzyklus
$\Delta f$: Änderung von f während eines Messzyklus

Das oben beschriebene Messverfahren funktioniert am besten, wenn der f-Sweep erfindungsgemäß mindestens eine Periode dieser Kurve abdeckt, also $|\Delta f| > |P|$. x und f sind stets positiv, v und w können aber unterschiedliche (relative) Vorzeichen annehmen. Dadurch kann der Nenner verschwinden. Die Singularität liegt bei

$$\frac{\Delta f}{f} = \frac{\Delta x}{x}$$

An dieser Stelle heben sich die Änderungen von x und f so auf, dass das Interferenz-Signal konstant wird.

In der Nähe der Singularität ist die Bedingung nicht mehr einzuhalten und die Feinmessung wird ungenau oder unmöglich. Rechts und links der Singularität gibt es zwei Bereiche, in denen die Bedingung erfüllbar ist. Aus $|\Delta f| > |P|$ lässt sich die Bedingung für $\Delta f$ ableiten (ohne Beschränkung der Allgemeinheit sei $\Delta f$ positiv) und in der folgenden Tabelle darstellen:

| Fall | Positiver Nenner | Negativer Nenner |
|---|---|---|
| Anschauliche Einordnung | $\Delta f$ und $\Delta x$ sind gleichsinnig oder $\Delta f$ so groß, dass es die Bewegung in x überkompensiert. | $\Delta f$ und $\Delta x$ sind gegensinnig und $\Delta f$ so klein, dass es die Bewegung in x nicht ausgleicht. |
| Anforderung an $\Delta f$ | $\dfrac{\Delta f}{f} \geq \dfrac{c}{xf} - \dfrac{\Delta x}{x} = \dfrac{\lambda - \Delta x}{x}$ | $\dfrac{\Delta f}{f} \leq -\dfrac{c}{xf} - \dfrac{\Delta x}{x} = -\dfrac{\lambda + \Delta x}{x}$ |
| Geschwindigkeitsgrenze | $\dfrac{\Delta x}{\lambda} > 1 - \dfrac{x}{\lambda}\dfrac{\Delta f_{max}}{f}$ | $\dfrac{\Delta x}{\lambda} < -1$ |
| Interpretation | $\Delta f_{max}$ ist die Laser-bedingt maximale Sweep-Amplitude. Die Gleichung setzt ein Limit für die Geschwindigkeit bei gegensinniger Bewegung ($\Delta x$ negativ). Bei gleichsinniger Bewegung und nicht zu kleinem x ist sie leicht zu erfüllen. | Wenn das gegensinnige $\Delta x$ mindestens eine Wellenlänge durchläuft, kann es die Kontrastbedingung alleine erfüllen. $\Delta f$ hat das falsche Vorzeichen und kann nichts dazu beitragen. |

Die Singularität ist eine Komplikation, mit der auf zwei verschiedene Weisen umgegangen werden kann:

- Vermeiden: Δf wird so groß gewählt, dass in beiden Bewegungsrichtungen der linke Fall vorliegt:

$$\frac{\Delta f}{f} \geq \frac{\lambda + |\Delta x|}{x}$$

Die maximale Target-Geschwindigkeit wird dadurch stärker eingeschränkt, weil die Bedingung der linken Spalte auch für die gegensinnige Bewegung erfüllt werden muss:

$$\frac{|\Delta x|}{\lambda} < \frac{x}{\lambda}\frac{\Delta f_{max}}{f} - 1 \; ; \qquad |v|_{max} = \frac{x}{f}w_{max} - \frac{\lambda}{T_{min}}$$

(T= Dauer des Zyklus)

- In Kauf nehmen: Δf wird nur so groß gewählt, dass die Perioden-Bedingung bei gleichsinniger Bewegung erfüllt ist:

$$\frac{\Delta f}{f} \geq \frac{\lambda - |\Delta x|}{x} \quad .$$

Bei relativ hoher Geschwindigkeit kann bei gegensinniger Bewegung die Bedingung der rechten Spalte erfüllt sein, so dass eine Auswertung möglich ist. Auch wenn das nicht der Fall ist, bricht das Messverfahren nicht zusammen, denn die Grobmessung kann weiterlaufen, so dass der nächste Zyklus wieder ein valides Ergebnis liefern kann. Die maximale Target-Geschwindigkeit wird nicht eingeschränkt außer durch die Bedingung, dass die Grobmessung keine Perioden verlieren darf: $|v|/$ F < $\lambda$/2 (F: Sample-Frequenz).

Bei konstanter Target-Geschwindigkeit liefert der Sweep ein streng periodisches Interferenz-Spektrum. Eine Beschleunigung des Targets während des Sweeps (und höhere Terme) bewirken eine Verzerrung in Form einer Schwankung der Periodendauer. Das beeinträchtigt die Genauigkeit der Phasenmessung, aber nicht die Grobmessung. Die Reduktion der Genauigkeit wird also nicht kumuliert und verschwindet bei ruhigerer Bewegung wieder; deshalb kann sie in Kauf genommen werden.

Wie oben gesehen ist es in der statischen Sicht sinnvoll, den Sweep möglichst über eine Periode der Funktion Φ über f zu erstrecken. Für den Idealwert werden die Ungleichungen aus den beiden Möglichkeiten des vorigen Abschnitts als Gleichung verwendet:

$$\frac{\Delta f}{f} = \frac{\lambda \pm |\Delta x|}{x}$$

Die Amplitude des Sweeps muss aber vor seinem Start festgelegt werden, denn er muss mit konstanter Geschwindigkeit verlaufen. Das erfordert eine Prognose für Δx. Dafür eignet sich selbstverständlich Δx aus dem vorigen Zyklus. Ein Prognosefehler sollte aber nicht dazu führen, dass merklich weniger als eine Periode des Interferenz-Spektrums überdeckt wird, weil sonst die Phasenmessung versagt und ein Messwert ausfällt. Ein zu großer Bereich ist weniger kritisch. Mit dem Problem kann auf zweierlei Weise umgegangen werden:

- Es wird dem Anwender überlassen, eine für seine Anwendung typische maximale Beschleunigung vorzugeben. Die Amplitude wird dann so gewählt, dass auch beim Eintreten dieser Beschleunigung der Bereich gut funktionierender Phasenmessung nicht verlassen wird:

$$\frac{\Delta f}{f} = \frac{1}{x}\left(\lambda \pm |\Delta x| + a_{max}T\right)$$

- Die typische Beschleunigung wird gemessen und der Sweep-Bereich dynamisch daran angepasst. Falls die Prognose "in der falschen Richtung" fehlschlägt, wird ein Messwert ausgelassen.

**Patentansprüche**

1. Verfahren zur interferometrischen Bestimmung von geometrischen und/oder optischen Parametern einer Kavität (40, 45), welche auf einer Seite von einem in Längsrichtung der Kavität beweglichen, reflektierenden Objekt (40) begrenzt wird, aufweisend die Verfahrensschritte:

   - Zyklisches Durchstimmen der Frequenz f einer kohärenten Lichtquelle (10) über einen Frequenzbereich $\Delta f$ in beide Frequenzrichtungen,
   - Ableitung eines Zielstrahls und eines Referenzstrahls aus der kohärenten Lichtquelle, wobei der Zielstrahl wenigstens einmal die Kavität durchläuft,
   - Erzeugung eines von der Frequenz f der Lichtquelle abhängigen Interferenzsignals I(f) durch Überlagerung des Zielstrahls mit dem Referenzstrahl, Wahl des Frequenzbereichs $\Delta f$ und der Änderungsrate w der Frequenz f derart, dass unter Berücksichtigung der Geschwindigkeit v des Objektes (40) ein periodisches Interferenzsignal I(f) über wenigstens eine Periode P desselben erhalten wird,
   - Erfassung eines Interferenzspektrums des periodischen Interferenzsignals I(f) über den gewählten Frequenzbereich $\Delta f$ der Frequenz f der kohärenten Lichtquelle,
   - Auswertung einer Vielzahl von Messpunkten des erfassten Interferenzspektrums über den gewählten Frequenzbereich $\Delta f$ durch numerischen Fit der Messpunkte an eine erzeugte mathematische Funktion, und
   - Bestimmung der geometrischen und/oder optischen Parametern der Kavität (40, 45) durch Ermittlung der Parameter der erzeugten mathematischen Funktion,

   wobei die erzeugte mathematische Funktion des Interferenzsignals I(f) eine periodische Funktion ist, deren Amplitude und Phase bestimmt werden und die Phase dieser periodischen Funktion bei einer festen Referenzfrequenz $f_R$ als Ergebnis ermittelt wird.

2. Verfahren nach Anspruch 1, wobei die Parameter der Kavität (40, 45) deren Länge x sowie deren Reflektivität und/oder Brechungsindex umfassen.

3. Verfahren nach Anspruch 1 oder 2, wobei die erzeugte mathematische Funktion eine Sinusfunktion ist, wobei Amplitude und Phase des Interferenzsignals I(f) bestimmt werden.

4. Verfahren nach Anspruch 3, wobei die Größe des ausgewerteten Frequenzbereichs $\Delta f$ dem jeweils zu messenden Parameter und/oder der zu vermessenden Kavität dynamisch angepasst wird.

5. Verfahren nach Anspruch 3 oder 4, wobei der numerische Fit mittels eines Levenberg-Marquardt-Algorithmus oder mittels eines Lock-In-Verfahrens mit synthetischer Referenz erfolgt.

6. Verfahren nach einem der Ansprüche 1 - 5, wobei eine zu bestimmende Länge x durch die Länge eines Ziel-Interferometers gebildet wird, das durch einen optischen Koppler (45) und ein bewegliches Objekt (40) begrenzt ist.

7. Verfahren nach einem der Ansprüche 1- 6, wobei die Frequenz f der kohärenten Lichtquelle (10) unter Verwendung der Referenzfrequenz $f_R$ einer bestimmten Absorptionslinie eines Absorptionsmaterials kalibriert wird.

8. Verfahren nach Anspruch 7, wobei die Frequenzkalibrierung durch numerischen Fit an die Frequenz $f_R$ der Absorptionslinie des Absorptionsmaterials erfolgt.

9. Verfahren nach einem der Ansprüche 1 - 8, wobei die Frequenz f der kohärenten Lichtquelle (10) unter Verwendung eines Referenz-Interferometers (60) bekannter Länge kalibriert wird.

10. Verfahren nach einem der Ansprüche 1 - 9, wobei die Durchstimmung der Frequenz f der kohärenten Lichtquelle (10) linear im Frequenzraum erfolgt.

11. Verfahren nach einem der Ansprüche 1 - 10, aufweisend den Verfahrensschritt einer Grobmessung der Länge x der Kavität (40, 45) durch Auszählen der durchlaufenen Perioden des Interferenzsignals I(f).

12. Verfahren nach einem der Ansprüche 1 -11, wobei die Frequenz f der kohärenten Lichtquelle (10) thermisch mittels Temperatursteuerung, elektrisch durch Regelung eines Ansteuerstroms oder mechanisch durch Veränderung der Länge der Kavität der Lichtquelle (10) durchgestimmt wird.

**13.** Verfahren nach einem der Ansprüche 6 - 12, wobei der durchfahrene Frequenzbereich Δf der kohärenten Lichtquelle (10) in Abhängigkeit einer Geschwindigkeit des beweglichen Objekts (40) gewählt wird.

**14.** Vorrichtung zur interferometrischen Bestimmung von geometrischen und/oder optischen Parametern einer Kavität (40, 45), welche auf einer Seite von einem in Längsrichtung der Kavität beweglichen, reflektierenden Objekt (40) begrenzt wird, aufweisend:

- eine durchstimmbare kohärente Lichtquelle (10),
- eine Modulationseinheit (12) eingerichtet zum zyklischen Durchstimmen der Frequenz f der kohärenten Lichtquelle (10) über einen Frequenzbereich Δf in beide Frequenzrichtungen,
- einen ersten optischen Koppler (45) zum Aufteilen des von der kohärenten Lichtquelle (10) abgegebenen Lichts in einen Zielstrahl und einen Referenzstrahl und zum Einkoppeln des ersten Zielstrahls in die Kavität, die durch den optischen Koppler (45) und ein bewegliches Objekt (40) begrenzt ist und die zu bestimmende Länge x aufweist,
- einen Detektor (30) zur frequenzaufgelösten Detektion eines durch Überlagerung des Zielstrahls mit dem Referenzstrahl erzeugten Interferenzsignals I(f) und zur Erfassung eines Interferenzspektrums des Interferenzsignals I(f) über den gewählten Frequenzbereich Δf der Frequenz f der kohärenten Lichtquelle,
- eine Auswertungseinheit (20) ausgebildet zur Auswertung einer Vielzahl von Messpunkten des erfassten Interferenzspektrums über den gewählten Frequenzbereich Δf durch numerischen Fit der Messpunkte an eine erzeugte mathematische Funktion, und zur Bestimmung der geometrischen und/oder optischen Parametern der Kavität (40, 45) durch Ermittlung der Parameter der erzeugten mathematischen Funktion,
wobei der Frequenzbereich Δf und der Änderungsrate w der Frequenz f derart gewählt werden, dass unter Berücksichtigung der Geschwindigkeit v des Objektes (40) ein periodisches Interferenzsignal I(f) über wenigstens eine Periode P desselben erhalten wird,
und wobei die erzeugte mathematische Funktion des Interferenzsignals I(f) eine periodische Funktion ist, deren Amplitude und Phase bestimmt werden und die Phase dieser periodischen Funktion bei einer festen Referenzfrequenz $f_R$ als Ergebnis ermittelt wird.

**15.** Vorrichtung nach Anspruch 14, zur Kalibrierung der Frequenz f der kohärenten Lichtquelle (10) aufweisend eine mit einem Absorptionsmaterial gefüllte Gaszelle (50), welches Absorptionsmaterial eine Absorptionslinie bei der Referenzfrequenz $f_R$ aufweist.

**Claims**

**1.** Method for interferometric determination of geometric and/or optical parameters of a cavity (40, 45), which on one side is limited by a reflective object (40) movable in longitudinal direction, including the method steps:

- Cyclical tuning the frequency f of a coherent light source (10) over a frequency range Δf in both directions,
- Deriving a target beam and a reference beam from the coherent light source, where the target beam traverses the cavity at least once,
- Generating an interference signal 1(f) that depends on the frequency f of the light source by superimposing the reference beam on the target beam, selecting of the frequency range Δf and the rate of change w of the frequency f such that, taking into account the velocity v of the object (40), a periodic interference signal 1(f) is obtained over at least one period P thereof,
- Acquiring an interference spectrum of the periodic interference signal I(f) over the selected frequency range Δf of the frequency f of the coherent light source,
- Analysing a large number of measurement points of the acquired interference spectrum over the selected frequency range Δf through numerical fit of the measurement points to a generated mathematical function, and
- Determining the geometric and/or optical parameters of the cavity (40, 45) by ascertaining the parameters of the generated mathematical function, wherein the generated mathematical function of the interference signal I(f) is a periodic function whose amplitude and phase are determined and the phase of this periodic function at a fixed reference frequency $f_R$ is determined as result.

**2.** Method in accordance with Claim 1, wherein the geometric parameters of the cavity (40, 45) comprise its length x.

**3.** Method in accordance with Claim 1 or 2, wherein the generated mathematical function is a sine function, whereby the amplitude and phase of the interference signal 1(f) are determined.

4. Method in accordance with Claim 3, where the magnitude of the analysed frequency range Δf is matched dynamically to each of the parameters to be measured and/or to the cavity to be measured.

5. Method in accordance with Claim 3 or 4, wherein the numerical fit is performed by means of a Levenberg-Marquardt algorithm or by means of a lock-in method with synthetic reference.

6. Method in accordance with one of the Claims 1 - 5, wherein the length x to be determined is formed by the length of a target interferometer that is bounded by an optical coupler (45) and a moving object (40).

7. Method in accordance with one of the Claims 1 - 6, wherein the frequency f of the coherent light source (10) is calibrated by utilising the known frequency $f_R$ of a particular absorption line of an absorption material.

8. Method in accordance with Claim 7, wherein the frequency calibration takes place through a numerical fit to the frequency $f_R$ of the absorption line of the absorption material.

9. Method in accordance with one of the Claims 1 - 8, wherein the frequency f of the coherent light source (10) is calibrated by utilising a reference interferometer (60) of known length.

10. Method in accordance with one of the Claims 1 - 9, wherein the tuning of the frequency f of the coherent light source (10) takes place linearly in frequency space.

11. Method in accordance with one of the Claims 1 - 10, including the method step of a coarse measurement of the length x of the cavity (40, 45) by counting out the traversed periods of the interference signal I(f).

12. Method in accordance with one of the Claims 1 - 11, wherein the frequency f of the coherent light source (10) is tuned thermally by means of temperature control, electrically by regulating a driving current or mechanically by changing the length of the cavity of the light source (10).

13. Method in accordance with one of the Claims 6 - 12, wherein the swept frequency range Δf of the coherent light source (10) is chosen in dependence on a speed of the moving object (40).

14. Device for interferometric determination of geometric and/or optical parameters of a cavity (40, 45), which on one side is limited by a reflective object (40) movable in longitudinal direction, comprising:

    - a tuneable coherent light source (10),
    - a modulation unit (12) arranged to cyclically tune the frequency f of the coherent light source (10) over a frequency range Δf in both frequency directions,
    - a first optical coupler (45) for splitting the light emitted by the coherent light source (10) into a target beam and a reference beam and for coupling the first target beam into a cavity, which is bounded by the optical coupler (45) and a moving object (40) and has the length x to be determined,
    - a detector (30) for frequency-resolved detection of an interference signal I(f) generated through superimposition of the reference beam on the target beam and for acquiring an interference spectrum of the interference signal I(f) over the selected frequency range Δf of the frequency f of the coherent light source,
    - an analysing unit (20) configured for analysing a large number of measurement points of the acquired interference spectrum over the selected frequency range Δf through numerical fit of the measurement points to a generated mathematical function, and for determining the geometric and/or optical parameters of the cavity (40, 45) by ascertaining the parameters of the generated mathematical function,
    wherein the frequency range Δf and the rate of change w of the frequency f is selected such that, taking into account the velocity v of the object (40), a periodic interference signal 1(f) is obtained over at least one period P thereof,
    and wherein the generated mathematical function of the interference signal I(f) is a periodic function whose amplitude and phase are determined and the phase of this periodic function at a fixed reference frequency $f_R$ is determined as result.

15. Device in accordance with Claim 14, for calibrating the frequency f of the coherent light source (10) comprising a gas cell (50) filled with an absorption material, which absorption material exhibits an absorption line of a known frequency $f_R$.

**EP 3 420 304 B1**

**Revendications**

1. Procédé de détermination interférométrique de paramètres géométriques et/ou optiques d'une cavité (40, 45) qui est délimitée sur un côté par un objet réfléchissant (40) mobile dans la direction longitudinale de la cavité, comprenant les étapes de procédé suivantes :

   - accord cyclique de la fréquence f d'une source de lumière cohérente (10) sur une gamme de fréquences Δf dans les deux directions de fréquence,
   - dérivation d'un faisceau de visée et d'un faisceau de référence à partir de la source de lumière cohérente, le faisceau de visée traversant au moins une fois la cavité,
   - génération d'un signal d'interférence I(f) dépendant de la fréquence f de la source lumineuse par superposition du faisceau de visée avec le faisceau de référence, en sélectionnant la gamme de fréquences Δf et le taux de variation w de la fréquence f de manière à obtenir, en tenant compte de la vitesse v de l'objet (40), un signal d'interférence périodique I(f} sur au moins une période P de celui-ci,
   - acquisition d'un spectre d'interférence du signal d'interférence périodique I(f) sur la gamme de fréquences Δf sélectionnée de la fréquence f de la source de lumière cohérente,
   - analyse d'une pluralité de points de mesure du spectre d'interférence acquis sur la gamme de fréquences choisie Δf par ajustement numérique des points de mesure à une fonction mathématique générée, et
   - détermination des paramètres géométriques et/ou optiques de la cavité (40, 45) par détermination des paramètres de la fonction mathématique générée,

   la fonction mathématique générée du signal d'interférence I(f) étant une fonction périodique dont l'amplitude et la phase sont déterminées, et la phase de cette fonction périodique à une fréquence de référence fixe $f_R$ étant déterminée en conséquence.

2. Procédé selon la revendication 1, dans lequel les paramètres de la cavité (40, 45) comprennent sa longueur x ainsi que sa réflectivité et/ou son indice de réfraction.

3. Procédé selon la revendication 1 ou la revendication 2, dans lequel la fonction mathématique générée est une fonction sinusoïdale, l'amplitude et la phase du signal d'interférence I(f) étant déterminées.

4. Procédé selon la revendication 3, dans lequel la taille de la gamme de fréquences Δf analysée est adaptée de manière dynamique au paramètre respectif à mesurer et/ou à la cavité à mesurer.

5. Procédé selon la revendication 3 ou la revendication 4, dans lequel l'ajustement numérique est effectué au moyen d'un algorithme de Levenberg-Marquardt ou au moyen d'un procédé de verrouillage avec référence synthétique.

6. Procédé selon l'une des revendications 1 à 5, dans lequel une longueur x à déterminer est formée par la longueur d'un interféromètre cible délimitée par un coupleur optique (45) et un objet mobile (40).

7. Procédé selon l'une quelconque des revendications 1 à 6, dans lequel la fréquence f de la source de lumière cohérente (10) est étalonnée par l'utilisation de la fréquence de référence $f_R$ d'une raie d'absorption donnée d'un matériau absorbant.

8. Procédé selon la revendication 7, dans lequel l'étalonnage de la fréquence est réalisé par ajustement numérique à la fréquence $f_R$ de la raie d'absorption du matériau absorbant.

9. Procédé selon l'une quelconque des revendications 1 à 8, dans lequel la fréquence f de la source de lumière cohérente (10) est calibrée par l'utilisation d'un interféromètre de référence (60) de longueur connue.

10. Procédé selon l'une quelconque des revendications 1 à 9, dans lequel l'accord de la fréquence f de la source de lumière cohérente (10) est réalisé de manière linéaire dans l'espace des fréquences.

11. - Procédé selon l'une des revendications 1 à 10, comprenant l'étape consistant à mesurer grossièrement la longueur x de la cavité (40, 45) par comptage des périodes traversées du signal d'interférence I(f).

12. Procédé selon l'une des revendications 1 à 11, dans lequel la fréquence f de la source de lumière cohérente (10) est ajustée thermiquement par commande de la température, électriquement par régulation d'un courant de commande ou mécaniquement par modification de la longueur de la cavité de la source de lumière (10).

13. Procédé selon l'une des revendications 6 à 12, dans lequel la gamme de fréquences $\Delta f$ traversée par la source de lumière cohérente (10) est choisie en fonction d'une vitesse de l'objet mobile (40).

14. Dispositif de détermination interférométrique de paramètres géométriques et/ou optiques d'une cavité (40, 45) délimitée d'un côté par un objet réfléchissant (40) mobile dans la direction longitudinale de la cavité, comprenant :

- une source de lumière cohérente accordable (10),
- une unité de modulation (12) conçue pour accorder cycliquement la fréquence f de la source de lumière cohérente (10) sur une gamme de fréquences $\Delta f$ dans les deux directions de fréquence,
- un premier coupleur optique (45) pour diviser la lumière émise par la source de lumière cohérente (10) en un faisceau de visée et un faisceau de référence et pour injecter le premier faisceau de visée dans la cavité, qui est délimitée par le coupleur optique (45) et un objet mobile (40) et qui présente la longueur x à déterminer,
- un détecteur (30) pour la détection résolue en fréquence d'un signal d'interférence I(f) généré par la superposition du faisceau de visée avec le faisceau de référence et pour l'acquisition d'un spectre d'interférence du signal d'interférence I(f) sur la gamme de fréquences sélectionnée $\Delta f$ de la fréquence f de la source de lumière cohérente,
- une unité d'analyse (20) conçue pour analyser une pluralité de points de mesure du spectre d'interférence acquis sur la gamme de fréquences $\Delta f$ choisie par ajustement numérique des points de mesure à une fonction mathématique générée, et pour déterminer les paramètres géométriques et/ou optiques de la cavité (40, 45) par détermination des paramètres de la fonction mathématique générée,
la gamme de fréquences $\Delta f$ et le taux de variation w de la fréquence f étant choisis de telle sorte que, compte tenu de la vitesse v de l'objet (40), un signal d'interférence périodique I(f) soit obtenu sur au moins une période P de celui-ci,
et dans lequel la fonction mathématique générée du signal d'interférence I(f} est une fonction périodique dont on détermine l'amplitude et la phase, et on détermine en conséquence la phase de cette fonction périodique à une fréquence de référence fixe $f_R$.

15. Dispositif selon la revendication 14, pour l'étalonnage de la fréquence f de la source de lumière cohérente (10), présentant une cellule à gaz (50) remplie d'un matériau absorbant, lequel matériau absorbant présente une raie d'absorption à la fréquence de référence f.

FIG. 1

FIG. 2

FIG. 3

FIG. 4

FIG. 5

FIG. 6

FIG. 7

**IN DER BESCHREIBUNG AUFGEFÜHRTE DOKUMENTE**

**In der Beschreibung aufgeführte Patentdokumente**

- EP 2363685 A1
- EP 2175228 A1
- JP 2012184967 A
- US 5956355 A

**In der Beschreibung aufgeführte Nicht-Patentliteratur**

- **COE.** *Frequency scanning interferometry in ATLAS: remote, multiple, simultaneous and precise distance measurements in a hostile environment*
- **KANG.** *Inspection system for microelectronics BGA package using wavelength scanning interferometry*
- **KNIGHT.** *High-resolution measurement of the free spectral range of an etalon*